# EUROPEAN PATENT APPLICATION

(11) **EP 4 737 981 A1**
(43) Date of publication of application: **06.05.2026**
(21) Application number: 24831529.3
(22) Date of filing: 27.05.2024
(51) Int. Cl.: G02B 26/10, G01S 7/481, G02B 26/08

(54) **MIRROR OSCILLATION DEVICE AND LIDAR DEVICE**

(30) Priority: 30.06.2023 JP 2023108420
(71) Applicant: DENSO CORPORATION, Kariya-city, Aichi 448-8661 (JP)
(72) Inventor: INUZUKA, Yoshinori, Kariya-city, Aichi 448-8661 (JP); KAIFU Teruaki, Kariya-city, Aichi 448-8661 (JP); OKADA Keita, Kariya-city, Aichi 448-8661 (JP); TOMITA Shodai, Kariya-city, Aichi 448-8661 (JP)
(74) Representative: Kuhnen & Wacker Patent- und Rechtsanwaltsbüro PartG mbB
(86) International application number: PCT/JP2024/019414
(87) International publication number: WO 2025/004658

(57) **Abstract**

A mirror unit (10) has a mirror surface (11) that reflects light. An extending portion (20) extends from a rear surface (12) of the mirror unit (10), facing away from the mirror surface (11). A shaft (30) is fixed to the extending portion (20). A base (40) is disposed in a region on a side of the mirror unit (10) facing away from the mirror surface (11). A bearing (50) is disposed on the base (40) and faces the extending portion (20) in an axial direction of the shaft (30). The bearing (50) supports the shaft (30) to be rotatable relative to the base (40). The mirror unit (10) is capable of oscillating within a predetermined angular range about a central axis (CL) of the shaft (30), together with the shaft (30) and the extending portion (20). At least a part of the bearing (50) and at least a part of the base (40) are disposed within a height range (H1) of the mirror unit (10) in the axial direction of the shaft (30) and in the region on the side of the mirror unit (10) facing away from the mirror surface (11).

## Description

### CROSS REFERENCE TO RELATED APPLICATION

This application is based on Japanese Patent Application No. 2023-108420, filed on June 30, 2023, the contents of which are incorporated herein by reference.

### TECHNICAL FIELD

The present disclosure relates to a mirror oscillation device and a LiDAR device including the mirror oscillation device.

### BACKGROUND ART

Conventionally, mirror oscillation devices have been known as components used in LiDAR devices and other devices. LiDAR is an abbreviation for Light Detection and Ranging, or Laser Imaging Detection and Ranging. LiDAR is a technology that emits laser light and measures a distance to a target object and a shape of the target object based on information from reflected light. The mirror oscillation device described in Patent Literature 1 has a configuration in which a shaft is fixed to a hole provided at a central portion in a thickness direction of a mirror unit, and two bearings, an actuator, and a rotation angle sensor are provided on a portion of the shaft protruding from the mirror unit. Specifically, one bearing and the actuator are disposed on the portion of the shaft protruding from one side of the mirror unit, while the other bearing and the rotation angle sensor are disposed on a portion of the shaft protruding from the other side of the mirror unit. In Patent Literature 1, the shaft is referred to as a "shaft portion", and the actuator is referred to as a "drive unit".

### PRIOR PATENT LITERATURE

### PATENT LITERATURE

Patent Literature 1:JP 2022-30904 A

### SUMMARY OF INVENTION

However, in the mirror oscillation device described in Patent Literature 1, the actuator, the one bearing, the mirror unit, the other bearing, and the rotation angle sensor are arranged in series in an axial direction in which a central axis of the shaft extends, thereby increasing a size in the axial direction. In addition, a proportion of a mirror surface of the mirror unit by size in the axial direction relative to the mirror oscillation device is small.

Therefore, when the mirror oscillation device described in Patent Literature 1 is used in a LiDAR device, a size of the mirror unit in the axial direction increases as the mirror oscillation device becomes large. Furthermore, the proportion of the mirror surface of the mirror unit relative to the mirror unit in the axial direction is small. When the LiDAR device is mounted on, for example, a roof of a vehicle, a rooftop has a convex shape protruding significantly upward by a size of the LiDAR device, which may increase air resistance during driving and may decrease fuel efficiency or electric efficiency. Alternatively, the LiDAR device may protrude significantly from the roof toward an interior of the vehicle, which may reduce forward visibility of the driver.

In view of the two above circumstances, a size of the mirror unit in the axial direction may be reduced. However, when the mirror unit is small, a spot diameter of laser beam also becomes small, which may result in performance degradation, such as degradation in S/N ratio or decrease in the measurement range.

The objective of the present disclosure is to reduce a size of a mirror unit of a mirror oscillation device in an axial direction, and increase a proportion of the mirror unit by size in the axial direction relative to the mirror oscillation device.

According to an aspect of the present disclosure, a mirror oscillation device includes a mirror unit, an extending portion, a shaft, a base, and a bearing. The mirror unit includes a mirror surface that reflects light. The extending portion extends from a surface of the mirror unit facing away from the mirror surface. The shaft is fixed to the extending portion. The base is disposed in a region on a side of the mirror unit facing away from the mirror surface of the mirror unit. The bearing is disposed on the base and faces the extending portion in an axial direction of the shaft. The bearing supports the shaft to be rotatable relative to the base. The mirror unit is configured to oscillate within a predetermined angular range about a central axis of the shaft, together with the shaft and the extending portion. At least a portion of the bearing and at least a portion of the base are disposed within a height range of the mirror unit in the axial direction of the shaft in the region on the side of the mirror unit facing away from the mirror surface.

Accordingly, the size of the mirror unit of the mirror oscillation device in the axial direction can be reduced by arranging the bearing and the base in the region on the side of the mirror unit facing away from the mirror surface. Furthermore, the proportion of the mirror surface of the mirror unit by size in the axial direction relative to the mirror oscillation device can be increased. Thus, the LiDAR device using this mirror oscillation device can reduce the size of the mirror unit in the axial direction, i.e., the size perpendicular to the direction in which the mirror unit oscillates. As a result, when the LiDAR device is mounted on the roof of the vehicle, it is possible to prevent the rooftop from having the significantly protruding convex shape above the vehicle, or to prevent the LiDAR device from significantly protruding from the roof toward the interior of the vehicle. In addition, the LiDAR device using this mirror oscillation device can increase the spot diameter of the laser beam by enlarging the mirror surface of the mirror unit, thereby improving the S/N ratio and expanding the measurement range.

According to another aspect in the present disclosure, a LiDAR device includes a housing, the mirror oscillation device according to an above-described aspect, a light source device, and a light receiving device. The housing includes a window through which laser light passes. The mirror oscillation device is disposed inside the housing. The light source device is disposed inside the housing, and is configured to irradiate the mirror surface of the mirror unit in the mirror oscillation device with the leaser light. The light receiving device that is disposed inside the housing, and is configured to receive the laser light that has been scanned by the mirror surface of the mirror unit in the mirror oscillation device, emitted to an outside through the window of the housing, reflected by an external object, returned through the window of the housing, and reflected by the mirror surface of the mirror unit.

Accordingly, the LiDAR device including this mirror oscillation device according to the above-described aspect can reduce the size of the mirror unit in the axial direction, i.e., the size perpendicular to the direction in which the mirror unit oscillates. As a result, when the LiDAR device is mounted on the roof of the vehicle, it is possible to prevent the rooftop from being in the significantly protruding convex shape above the vehicle, or to prevent the LiDAR device from significantly protruding from the roof toward the interior of the vehicle. In addition, the LiDAR device using this mirror oscillation device can increase the spot diameter of the laser beam, thereby improving the S/N ratio and expanding the measurement range.

The reference numerals in parentheses attached to the components and the like indicate an example of correspondence between the components and the like and specific components and the like in an embodiment described below.

### BRIEF DESCRIPTION OF DRAWINGS

FIG. 1 is a perspective view showing an internal configuration of a LiDAR device using the mirror oscillation device according to a first embodiment.
FIG. 2 is a diagram showing an example in which the LiDAR device is mounted on a roof of a vehicle.
FIG. 3 is a diagram showing another example in which the LiDAR device is mounted on the roof of the vehicle.
FIG. 4 is a perspective view of the mirror oscillation device according to the first embodiment.
FIG. 5 is a side view of the mirror oscillation device when viewed in a V direction in FIG. 4.
FIG. 6 is a front view of the mirror oscillation device when viewed in a VI direction in FIG. 4.
FIG. 7 is a planar view of the mirror oscillation device when viewed in a VII direction in FIG. 4.
FIG. 8 is a bottom view of the mirror oscillation device when viewed in a VIII direction in FIG. 4.
FIG. 9 is a cross-sectional view of the mirror oscillation device taken along a line IX-IX in FIG. 6.
FIG. 10 is a cross-sectional view of the mirror oscillation device taken along a line X-X in FIG. 5.
FIG. 11 is a rear view of the mirror unit and an extending portion disposed in the mirror oscillation device according to the first embodiment.
FIG. 12 is a side view of the mirror unit and an extending portion when viewed in a XII direction in FIG. 11.
FIG. 13 is a planar view of the mirror unit and the extending portion when viewed in a XIII direction in FIG. 11.
FIG. 14 is a planar view for explaining operation of the mirror oscillation device according to the first embodiment.
FIG. 15 is a planar view for explaining the operation of the mirror oscillation device according to the first embodiment.
FIG. 16 is a planar view for explaining the operation of the mirror oscillation device according to the first embodiment.
FIG. 17 is a planar view for explaining the operation when the mirror oscillation device according to the first embodiment is used in the LiDAR device.
FIG. 18 is a planar view for explaining the operation when the mirror oscillation device according to the first embodiment is used in the LiDAR device.
FIG. 19 is a planar view for explaining the operation when the mirror oscillation device according to the first embodiment is used in the LiDAR device.
FIG. 20 is a planar view for explaining the operation when the mirror oscillation device according to the first embodiment is used in the LiDAR device.
FIG. 21 is a rear view of a mirror unit, an extending portion, and a counterweight disposed in a mirror oscillation device according to a second embodiment.
FIG. 22 is a side view of the mirror unit, the extending portion, and the counterweight when viewed in a XXII direction in FIG.21.
FIG. 23 is a planar view of the mirror unit, the extending portion, and the counterweight when viewed in a XXIII direction in FIG.21.
FIG. 24 is a planar view of a mirror unit, an extending portion, and a counterweight disposed in a mirror oscillation device according to a third embodiment.

### EMBODIMENTS FOR CARRYING OUT THE INVENTION

Hereinafter, embodiments of the present disclosure will be described with reference to the drawings. In the following embodiments, the same or equivalent parts are denoted by the same reference numerals as each other, and explanations will be provided to the same reference numerals.

### (First Embodiment)

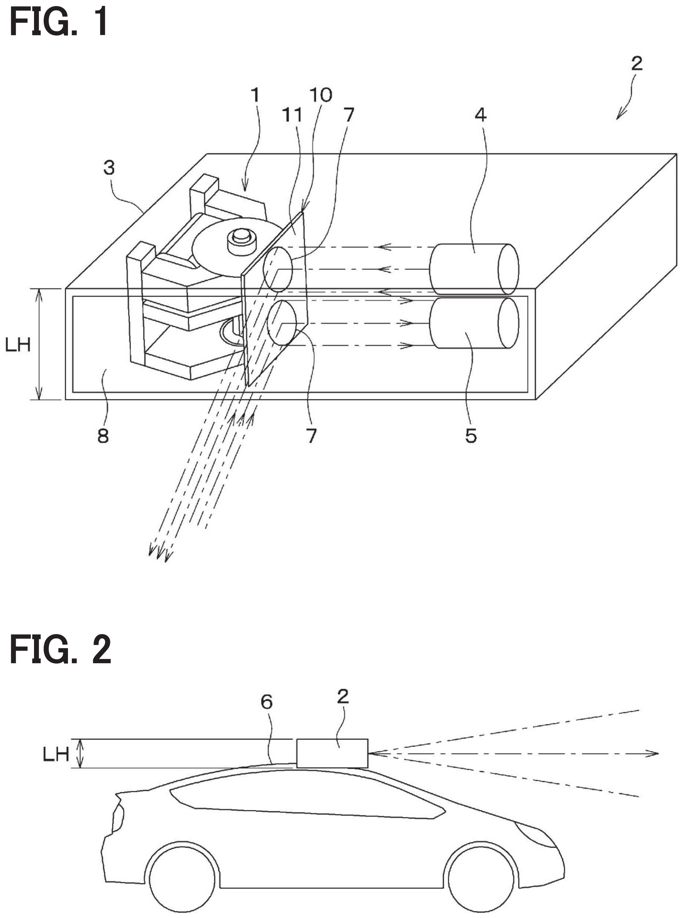

A first embodiment will be described with reference to the drawings. As illustrated in FIG. 1, a mirror oscillation device 1 of the first embodiment is used in a device such as a LiDAR device 2. The mirror oscillation device 1, a light source device 4 that emits laser light, a light receiving device 5 that receives the laser light, and other components are disposed inside a housing 3 of the LiDAR device 2. In FIG. 1, only an outline of the housing 3 is shown so that an interior of the housing 3 can be seen.

The LiDAR device 2 reflects and scans the light emitted from the light source device 4 by a mirror surface 11 of a mirror unit 10 disposed on the mirror oscillation device 1, and directs the light to an outside from a window 8 of the housing 3. Then, the laser light reflected by an external object and returning through the window 8 of the housing 3 is again reflected by the mirror surface 11 of the mirror unit 10, and received by the light receiving device 5. The LiDAR device 2 detects information such as a distance and a direction to the object based on time difference between when the laser light is emitted from the light source device 4 and when the light receiving device 5 receives the laser light. Additionally, the LiDAR device 2 may detect movement speed of the object based on changes in frequency between transmitted wave and received wave.

A diameter of a range where the leaser light is emitted to the mirror surface 11 of the mirror unit 10 is referred to as a spot diameter 7. When the spot diameter 7 is small, raindrops on the window 8 of the housing 3 of the LiDAR device 2 may cause the laser light to be diffusely reflected and not to be emitted to the outside. On the other hand, when the mirror surface 11 of the mirror unit 10 is large and correspondingly the spot diameter 7 of the laser light is large, the spot diameter 7 of the laser light may be made larger than the raindrops, and at least a portion of the laser light can be emitted to the outside. As a result, the LiDAR device 2 can improve a S/N ratio by increasing the spot diameter 7 of the laser light.

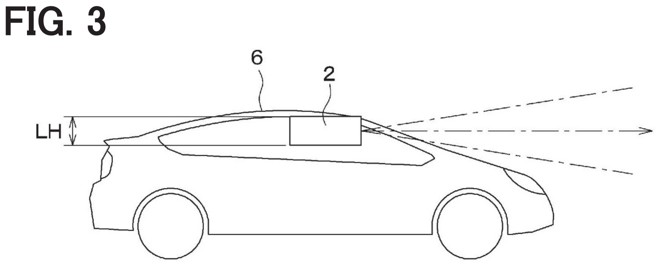

As illustrated in FIG. 2 and FIG. 3, the LiDAR device 2 may be mounted on a roof 6 of a vehicle. In that case, when a size LH of the LiDAR device 2 in an up-down direction becomes large by using a mirror oscillation device in Patent Literature 1, the rooftop has a convex shape protruding significantly upward from the vehicle, as illustrated in FIG. 2. As a result, air resistance during driving increases, which may decrease fuel efficiency or electric efficiency. Alternatively, as illustrated in FIG. 3, the LiDAR device 2 may protrude significantly from the roof 6 toward an interior of the vehicle, which may reduce forward visibility of the driver. As illustrated in FIG. 1, the size LH of the LiDAR device 2 refers to the size LH of the mirror unit 10 of the LiDAR device 2 in the axial direction, i.e., the size LH in a direction perpendicular to a direction in which the mirror unit 10 oscillates.

When the mirror surface 11 of the mirror unit 10 is made small considering the above circumstances, the spot diameter 7 of the laser light becomes small, which may cause performance degradation such as deterioration in S/N ratio, and reduction in measurement range. Thus, it may be required for the mirror oscillation device 1 used in the LiDAR device 2 that the mirror unit 10 is reduced in size in the axial direction of oscillation, and that a proportion of the mirror unit 10 by size in the axial direction in the mirror oscillation device 1 is increased. In the following descriptions, the size of the mirror unit 10 in the axial direction of oscillation in the mirror oscillation device 1 may be simply referred to as a "size of the mirror oscillation device 1 in the axial direction". When the size of the mirror oscillation device 1 in the axial direction is reduced, the size LH of the mirror unit 10 of the LiDAR device 2 in the axial direction, i.e., the size LH in the direction perpendicular to the direction in which the mirror unit 10 oscillates, can be made small.

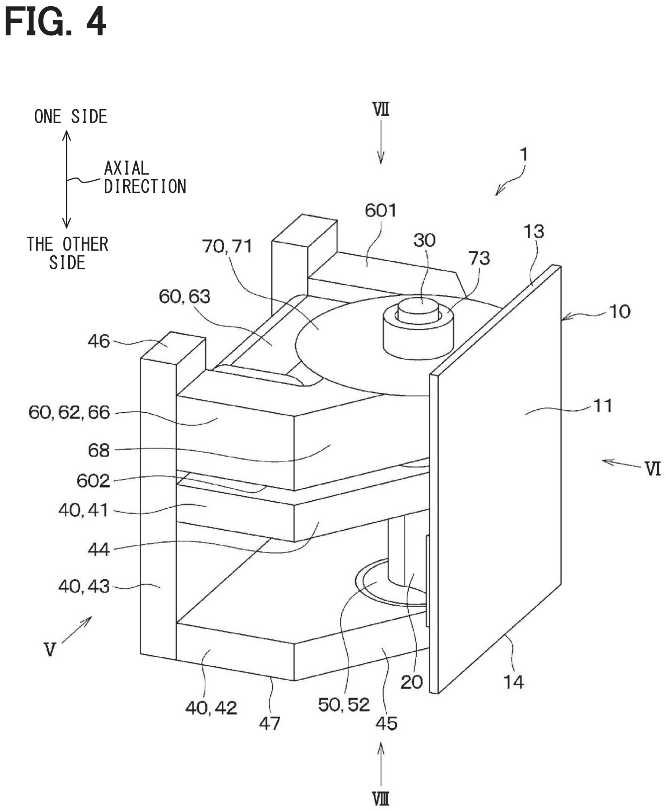

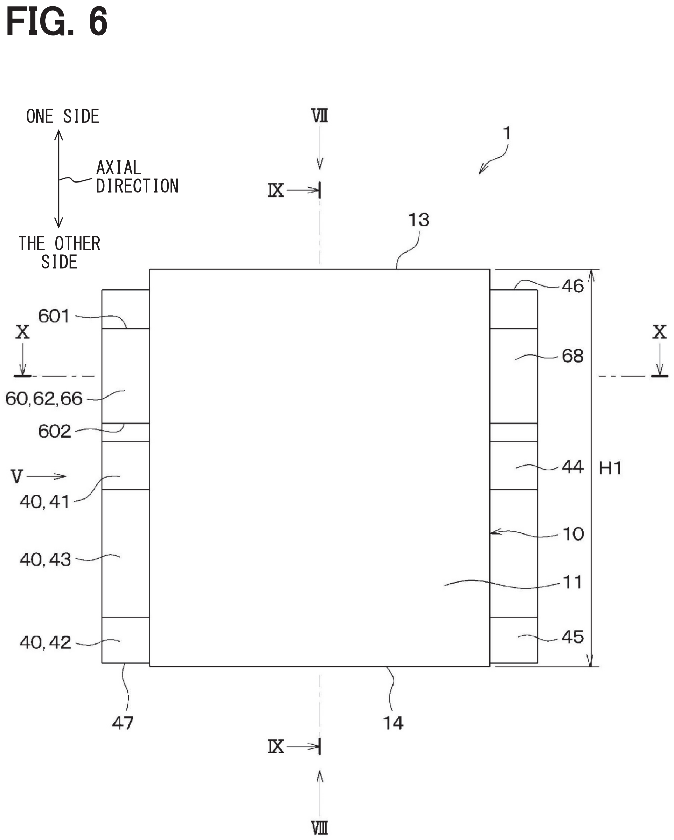

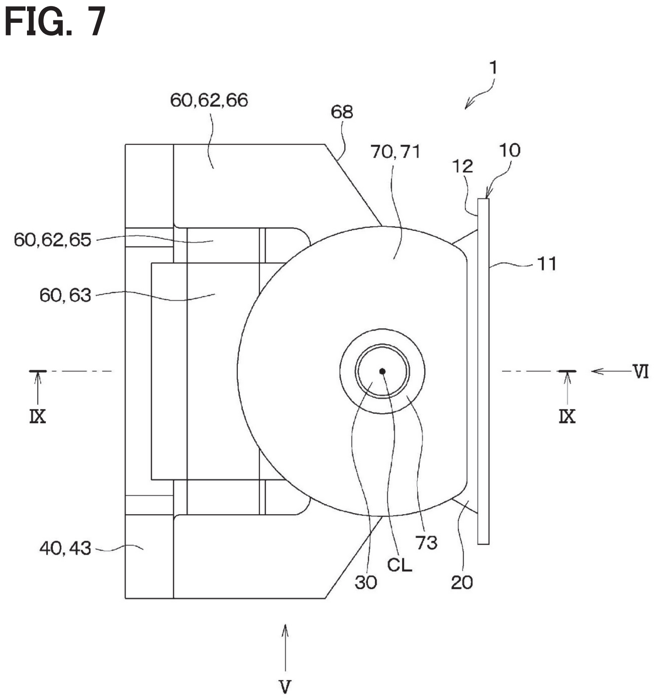

As illustrated in FIGS. 4 to 10, the mirror oscillation device 1 according to the first embodiment of the present disclosure includes the mirror unit 10, an extending portion 20, a shaft 30, a base 40, bearings 50, an actuator 60, and a sensor 70.

The mirror unit 10 is in a plate shape and has the mirror surface 11 that reflects light and is provided over an entire area of one surface facing in a thickness direction of the mirror unit 10.

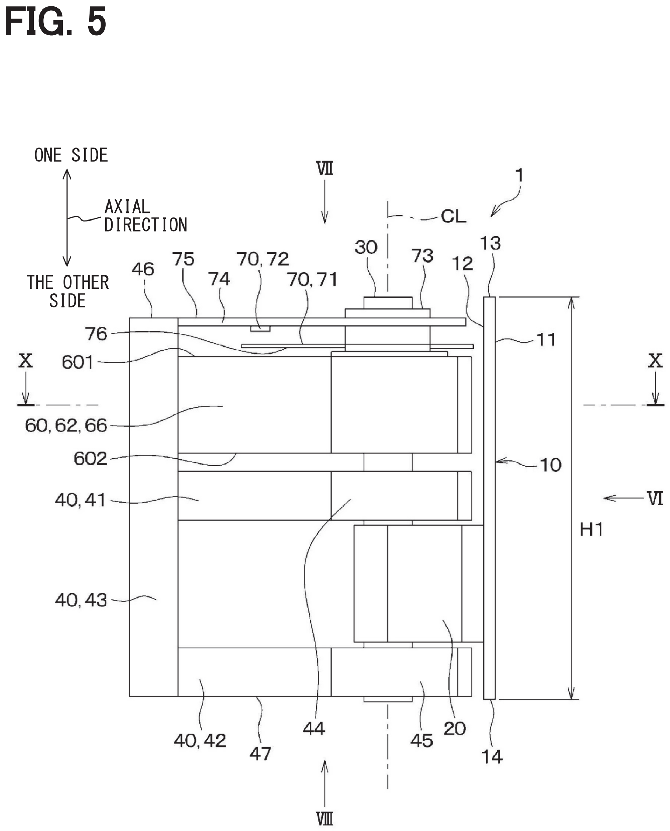

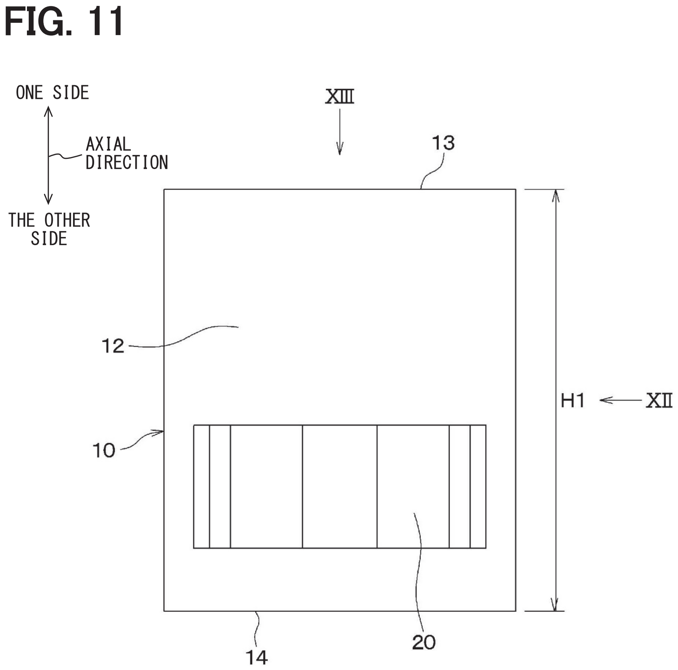

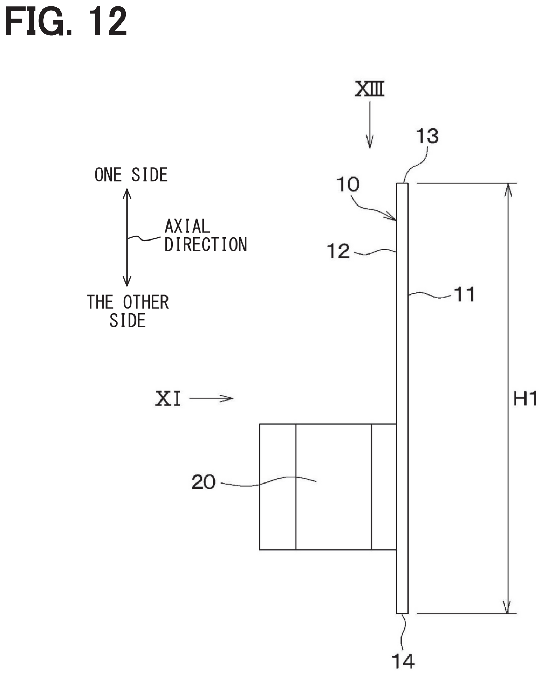

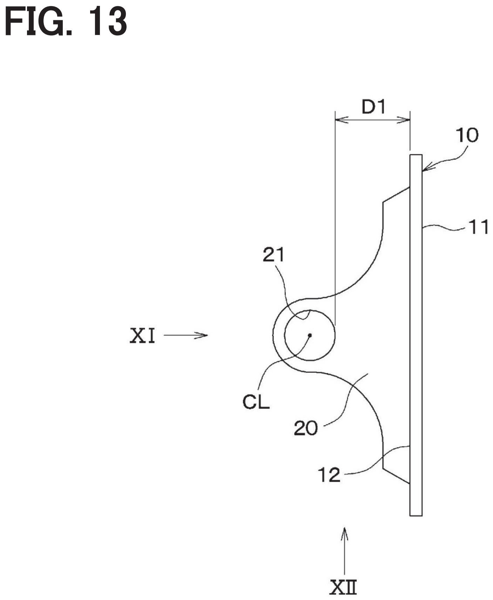

As illustrated in FIGS. 5, 9, and 11 to 13, the extending portion 20 is disposed on the other surface of the mirror unit 10 opposite to the mirror surface 11 (hereinafter, referred to as a "rear surface 12 of the mirror unit 10"). The extending portion 20 extends from the rear surface 12 of the mirror unit 10, facing away from the mirror surface 11. The extending portion 20 has a shape such that, when viewed in a direction in which a central axis CL of the shaft 30 extends, an area of the extending portion 20 at a position connected to the rear surface 12 of the mirror unit 10 is largest, and gradually decreases in a direction away from the rear surface 12 of the mirror unit 10. The extending portion 20 defines a hole 21 through which the shaft 30 is inserted, at a position away from the rear surface 12 of the mirror unit 10.

The shaft 30 is inserted through the hole 21 of the extending portion 20 and is fixed to the extending portion 20. The rear surface 12 of the mirror unit 10 and the shaft 30 have a predetermined distance D1 therebetween. In the following descriptions, a direction in which the central axis CL of the shaft 30 extends is simply referred to as the "axial direction." For convenience of explanation, in FIGS. 4 to 6, FIG. 9, FIG. 11, and FIG. 12, an upper side of the page is referred to as "one side in the axial direction," and a lower side of the page is referred to as "the other side in the axial direction."

As illustrated in FIGS. 4, 8, and 9, bearings 50 are arranged on both the one side and the other side in the axial direction with respect to the extending portion 20. One of the two bearings 50 disposed on the one side in the axial direction with respect to the extending portion 20 is referred to as a first bearing 51. The other of the two bearings 50 disposed on the other side in the axial direction with respect to the extending portion 20 is referred to as a second bearing 52. Both the first bearing 51 and the second bearing 52 are arranged on the base 40, and support the shaft 30 to be rotatable relative to the base 40. A thickness D2 of each of the bearings 50 in its radial direction is smaller than the distance D1 between the rear surface 12 of the mirror unit 10 and the shaft 30. Thus, the bearings 50 can be disposed within a height range H1 of the mirror unit 10 in the axial direction, in a region on a side of the mirror unit 10 facing away from the mirror surface 11. In the following descriptions, the region on the side of the mirror unit 10 facing away from the mirror surface 11 is referred to as a "rear region of the mirror unit 10."

The base 40 is provided in the rear region of the mirror unit 10. The base 40 includes a first base portion 41 in which the first bearing 51 is disposed, a second base portion 42 in which the second bearing 52 is disposed, and a connecting portion 43 that connects the first base section 41 and the second base section 42. The connecting portion 43 connects a part of the first base portion 41 facing away from the mirror unit 10 and a part of the second base portion 42 facing away from the mirror unit 10. The connecting portion 43 extends toward the one side in the axial direction beyond the first base portion 41.

Here, the size of the mirror oscillation device 1 in the axial direction can be reduced compared to the configuration described in Patent Literature 1, by disposing at least a portion of the bearings 50 and at least a portion of the base 40 within the height range H1 of the mirror unit 10 in the axial direction. Furthermore, the size of the mirror oscillation device 1 in the axial direction can be further reduced as in the first embodiment, by disposing the entirety of the bearings 50 and the entirety of the base 40 within the height range H1 of the mirror unit 10 in the axial direction. Specifically, an outer edge 46 on one side of the connecting portion 43 of the base 40 in the axial direction, and an outer edge 56 on one side of the first bearing 51 in the axial direction are positioned at the same height as an outer edge 13 of the mirror unit 10 on the one side in the axial direction, or on the other side in the axial direction with respect to the outer edge 13. In addition, an outer edge 47 on the other side of the second base portion 42 in the axial direction, and an outer edge 57 on the other side of the second bearing 52 in the axial direction are positioned at the same height as an outer edge 14 of the mirror unit 10 on the other side in the axial direction, or on the one side in the axial direction with respect to the outer edge 14. As a result, the size of the mirror oscillation device 1 in the axial direction can be further reduced. In the present disclosure, "the same height" not only refers to being exactly the same height, but also includes being substantially the same height, e.g., within manufacturing tolerances.

As illustrated in FIGS. 4, 5, 7, 9, and 10, the actuator 60 is provided in the rear region of the mirror unit 10. The actuator 60 is a drive device that drives the mirror unit 10 to oscillate together with the shaft 30 and the extending portion 20, within a predetermined angular range about the central axis CL of the shaft 30. In other words, the mirror unit 10 can oscillate within the predetermined angular range about the central axis CL of the shaft 30, together with the shaft 30 and the extending portion 20 by the driven actuator 60. The actuator 60 is disposed in a region on a side of the first base section 41 facing away from the second base section 42. As a result, the actuator 60 can be easily assembled to a subassembly including the base 40, the bearings 50, the shaft 30, and the mirror unit 10 during a manufacturing process of the mirror oscillation device 1.

The actuator 60 includes a magnet 61, a stator 62, and an electromagnetic coil 63. The magnet 61 has an annular shape and defines a central hole 64 through which the shaft 30 passes. The magnet 61 is fixed to the shaft 30. Specifically, the magnet 61 is fixed to a portion of the shaft 30 on the one side in the axial direction, extending from the first bearing 51. The magnet 61 may be fixed directly to the shaft 30, or may be fixed to the shaft 30 via a holder 73. The magnet 61 is magnetized with S and N poles alternately along a circumferential direction centered on the central axis CL of the shaft 30. In the first embodiment, the magnet 61 is magnetized such that one S pole and one N pole are arranged alternately in the circumferential direction centered on the central axis CL of the shaft 30.

The stator 62 is made from a magnetic material and constitutes a magnetic circuit between the electromagnetic coil 63 and the magnet 61. The stator 62 has a core portion 65 and a yoke portion 66. The electromagnetic coil 63 is disposed outward of the core portion 65. The yoke portion 66 connects one end of the core portion 65 to the other end of the core portion 65, and defines a hole 67 at a location where the magnet 61 is disposed. An inner wall of the hole 67 in the yoke portion 66 and the magnet 61 are not in contact with each other. Furthermore, the yoke portion 66 is fixed to a part of the connecting portion 43 of the base 40 in the axial direction. The part of the connecting portion 43 extends beyond the first base portion 41 toward the one side in the axial direction.

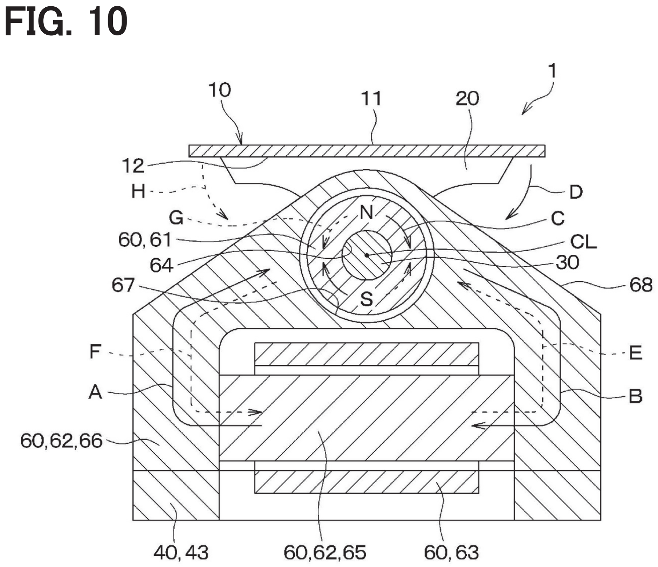

When the electromagnetic coil 63 is energized, magnetic flux flows through the stator 62 due to a magnetic field generated in the electromagnetic coil 63. Specifically, when an electric current is supplied in a predetermined direction to a wiring (not illustrated) of the electromagnetic coil 63, the magnetic flux flows from one side of the core portion 65, through the yoke portion 66, to the other side of the core portion 65, as indicated by solid arrows A and B in FIG. 10, thereby causing the magnet 61 to rotate. In FIG. 10, the N pole of the magnet 61 rotates to a right-side portion of the yoke portion 66 in FIG. 10, as indicated by a solid arrow C. Thus, the mirror unit 10 oscillates at a predetermined angle together with the shaft 30, as indicated by a solid arrow D.

On the other hand, when the electric current is supplied in a direction opposite to the predetermined direction to the wiring of the electromagnetic coil 63, the magnetic flux flows from the other side of the core portion 65, through the yoke portion 66, to the one side of the core portion 65, as indicated by dashed arrows E and F in FIG. 10, thereby causing the magnet 61 to rotate. In FIG. 10, the N pole of the magnet 61 rotates to the left-side portion of the yoke portion 66 in FIG. 10, as indicated by a dashed arrow G. Therefore, the mirror unit 10 oscillates at a predetermined angle together with the shaft 30, as indicated by a dashed arrow H.

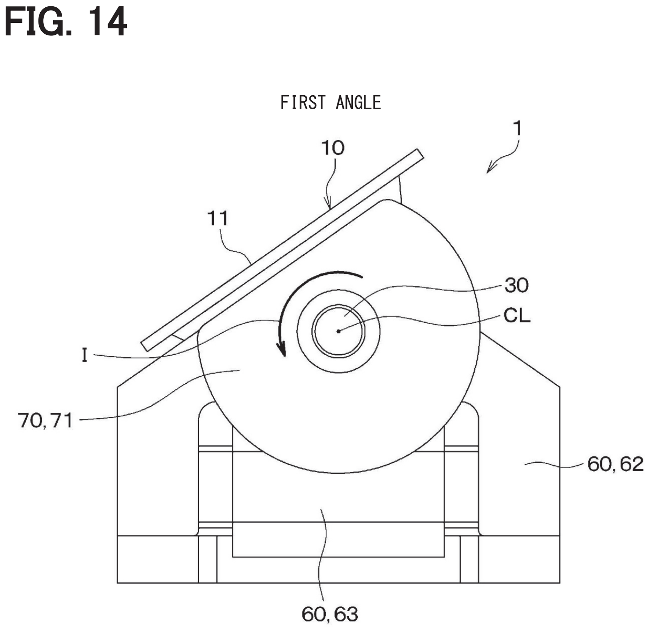

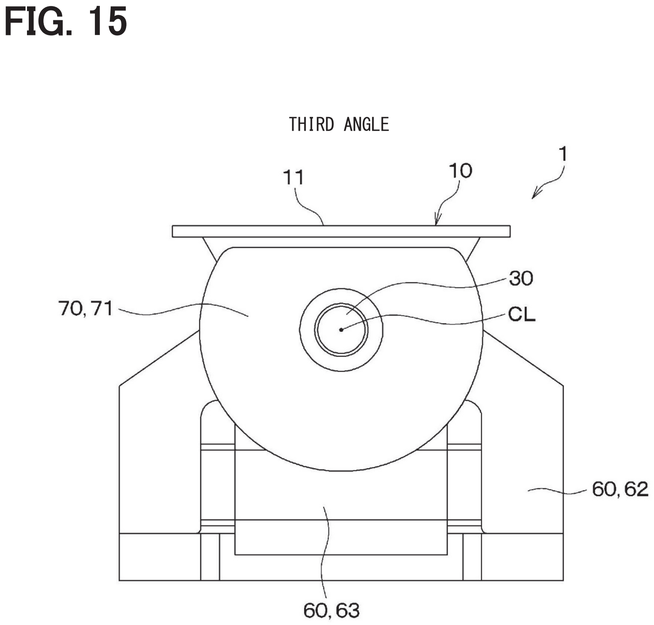

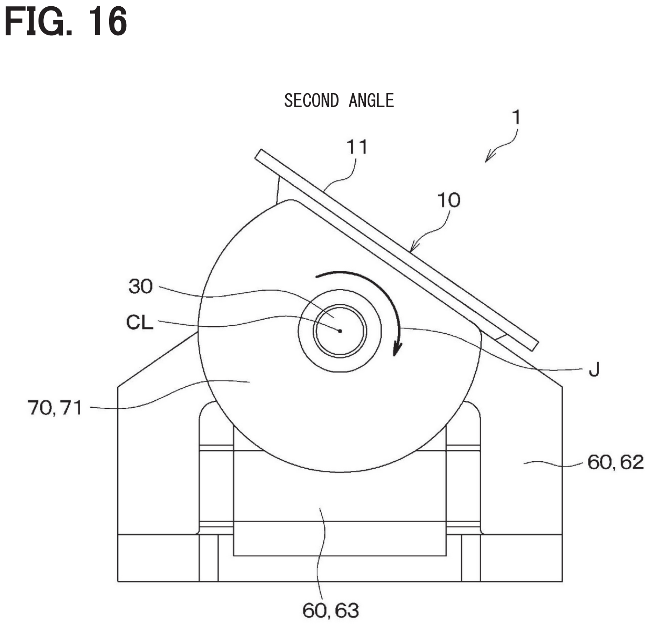

An angular range in which the mirror unit 10 oscillates is shown in FIGS. 14 to 16. A maximum angle at which the mirror unit 10 oscillates in a counterclockwise direction when viewed from the one side in the axial direction is referred to as a first angle, as indicated by an arrow I in FIG. 14. Furthermore, a maximum angle at which the mirror unit 10 oscillates in a clockwise direction is referred to as a second angle, as indicated by an arrow J in FIG. 16. As shown in FIG. 15, an angle at a midpoint between the first angle and the second angle is referred to as a third angle, as illustrated in FIG. 15. In the mirror oscillation device 1 of the first embodiment, the first angle illustrated in FIG. 14 may be -35 degrees, the second angle illustrated in FIG. 16 may be +35 degrees, and the third angle shown in FIG. 15 may be 0 degrees. Accordingly, the mirror oscillation device 1 of the first embodiment is configured so that the mirror unit 10 can oscillate within a range from -35 degrees to +35 degrees.

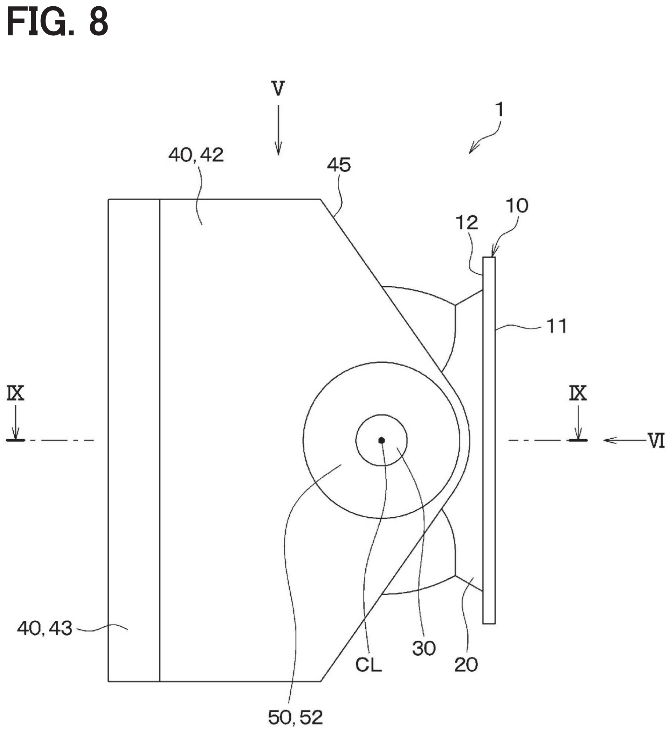

As illustrated in FIGS. 4 and 8, surfaces 44 and 45 of the base 40 face the mirror unit 10 and are inclined relative to the mirror unit 10 in a state of the third angle, so that the surfaces 44 and 45 extend away from both the mirror unit 10 and the shaft 30. As a result, when the actuator 60 drives the mirror unit 10 to oscillates, interference between the base 40 and the mirror unit 10 can be prevented. The surfaces 44 and 45 of the base 40 facing the mirror unit 10 are not limited to flat inclined surfaces illustrated in FIGS. 4 and 8, but may also be curved inclined surfaces. Although not illustrated, a magnetic or mechanical stopper may be provided between the inclined surfaces of the base 40 and the rear surface 12 of the mirror unit 10.

Furthermore, as illustrated in FIGS. 4, 7, and 10, surfaces 68 of the stator 62 facing the mirror unit 10 are inclined relative to the mirror unit 10 in a state of the third angle, so that the surfaces 68 extend away from both the mirror unit 10 and the shaft 30. As a result, when the actuator 60 drives the mirror unit 10 to oscillate, the interference between the stator 62 and the mirror unit 10 may be prevented. The surfaces 68 of the stator 62 facing the mirror unit 10 is not limited to the flat inclined surfaces illustrated in FIGS. 4, 7, and 10, but may also be the curved inclined surfaces.

Here, the size of the mirror oscillation device 1 in the axial direction can be reduced compared to the configuration described in Patent Literature 1, by disposing at least a portion of the actuator 60 within the height range H1 of the mirror unit 10 in the axial direction. Furthermore, the size of the mirror oscillation device 1 in the axial direction can become further reduced as in the first embodiment, by disposing the entirety of the actuator 60 within the height range H1 of the mirror unit 10 in the axial direction. Specifically, an outer edge 601 on one side of the actuator 60 in the axial direction is positioned at the same height as the outer edge 13 of the mirror unit 10 on the one side in the axial direction or on the other side in the axial direction with respect to the outer edge 13. In addition, an outer edge 602 of the actuator 60 on the other side in the axial direction is positioned at the same height as the outer edge 14 of the mirror unit 10 on the other side in the axial direction, or on the one side in the axial direction with respect to the outer edge 14. As a result, the size of the mirror oscillation device 1 in the axial direction can be further reduced.

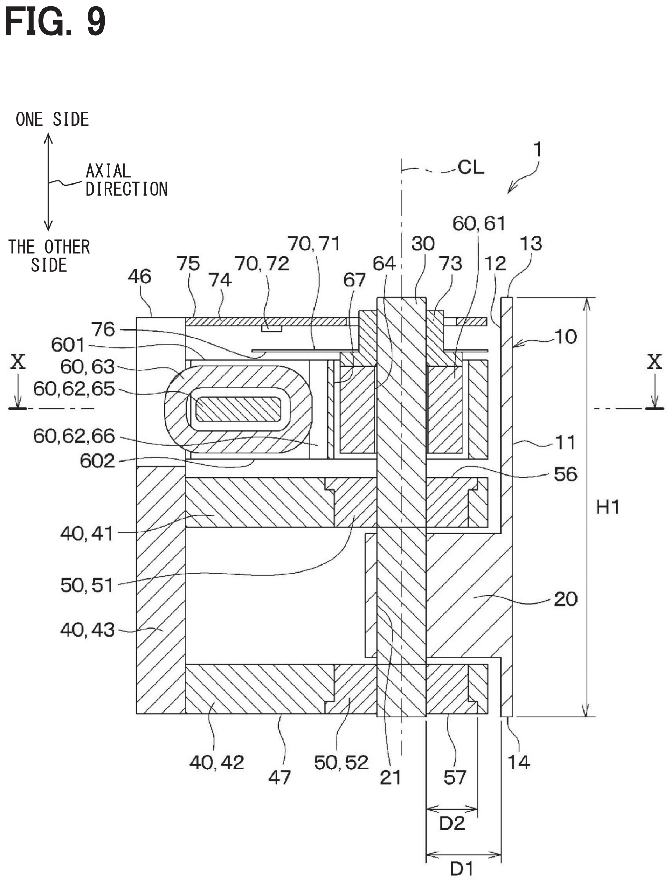

The sensor 70 is disposed in the rear region of the mirror unit 10. The sensor 70 is a rotational angle sensor that detects an angle of the mirror unit 10 relative to the base 40. In the first embodiment, a rotary encoder is used as the sensor 70, for example. As illustrated in FIGS. 5 and 9, the rotary encoder includes a rotary disk 71 and a detecting element 72. The rotary disk 71 is fixed to the holder 73 disposed on a portion of the shaft 30 that extends beyond the magnet 61 toward the one side in the axial direction, and rotates together with the shaft 30 and the holder 73. The detecting element 72 may be a photo IC, and is mounted on a substrate 74. The substrate 74 is fixed to a portion of the connecting portion 43 of the base 40 that extends beyond the first base portion 41 toward the one side in the axial direction. The substrate 74 and the detecting element 72 are illustrated only in FIGS. 5 and 9, and are omitted in other drawings.

Here, the size of the mirror oscillation device 1 in the axial direction can be reduced compared to the configuration described in Patent Literature 1, by disposing at least a portion of the sensor 70 within the height range H1 of the mirror unit 10 in the axial direction. Furthermore, the size of the mirror oscillation device 1 in the axial direction can become further reduced as in the first embodiment, by disposing the entirety of the sensor 70 within the height range H1 of the mirror unit 10 in the axial direction. Specifically, an outer edge 75 of the sensor 70 on the one side in the axial direction is positioned at the same height as the outer edge 13 of the mirror unit 10 on the one side in the axial direction or on the other side in the axial direction with respect to the outer edge 13. In addition, with respect to the outer edge 14 of the other side of the mirror unit 10 in the axial direction, an outer edge 76 of the sensor 70 on the other side in the axial direction is positioned at the same height as the outer edge 14 of the mirror unit 10 on the other side in the axial direction or on the one side in the axial direction with respect to the outer edge 14. As a result, the size of the mirror oscillation device 1 in the axial direction can be further reduced.

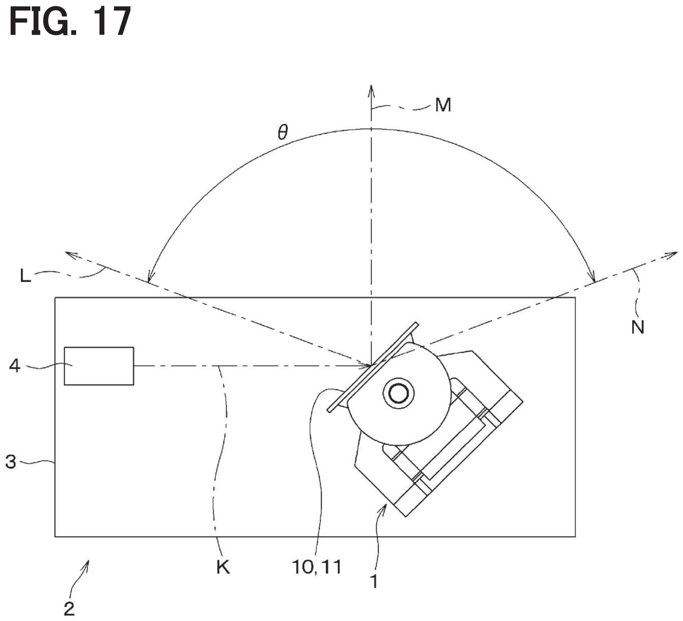

As illustrated in FIG. 17, the LiDAR device 2 using the mirror oscillation device 1 of the first embodiment is capable of scanning and emitting laser light externally within a predetermined angular range θ (e.g., a maximum range of 140 degrees). As indicated by an arrow K, the light source device 4 disposed in the housing 3 irradiates the mirror unit 10 with the laser light from an outside of the predetermined angular range in which the leaser light is scanned. The controllable range in which the LiDAR device 2 scans the laser light is set to be smaller than the maximum range in which the mirror unit 10 oscillates (e.g., 120 degrees or less).

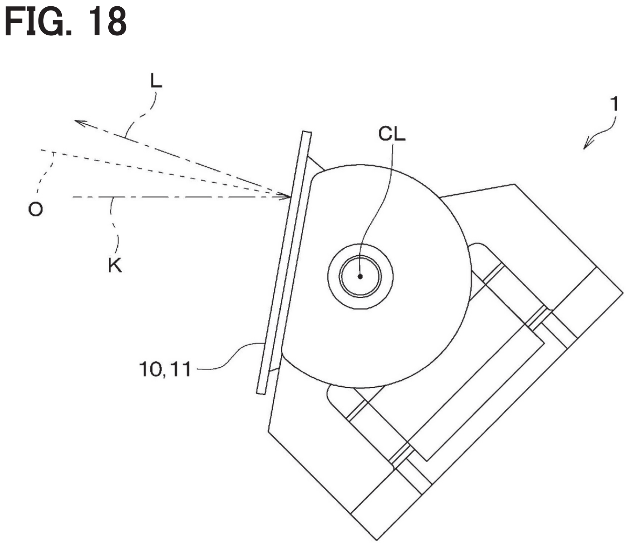

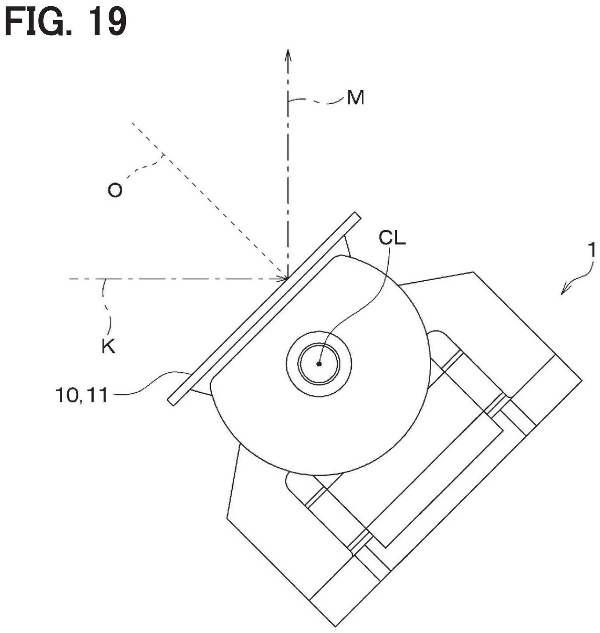

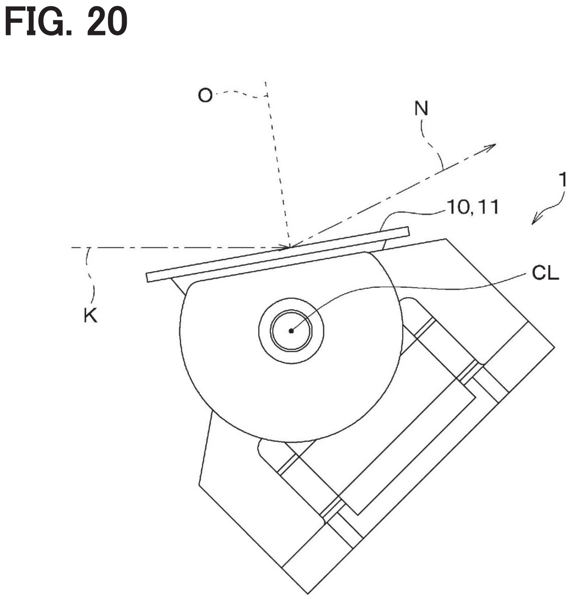

Specifically, when the mirror unit 10 is at the first angle (e.g., -35 degrees), the laser light emitted from the light source device 4 is reflected at an acute angle by the mirror surface 11 of the mirror unit 10 and emitted externally, as indicated by arrows K and L in FIGS. 17 and 18. A normal line of the mirror surface 11 is indicated by a dashed line O in FIGS. 18 to 20. When the mirror unit 10 is at the third angle (e.g., 0 degrees), the laser light emitted from the light source device 4 is reflected at a right angle by the mirror surface 11 of the mirror unit 10 and emitted externally, as indicated by arrows K and M in FIGS. 17 and 19. When the mirror unit 10 is at the second angle (e.g., +35 degrees), the laser light emitted from the light source device 4 is reflected at an obtuse angle by the mirror surface 11 of the mirror unit 10 and emitted externally, as indicated by arrows K and N in FIGS. 17 and 20. The mirror unit 10 of the mirror oscillation device 1 oscillates to repeatedly move between the first angle, the second angle, and the third angle, thereby scanning the laser light.

The mirror oscillation device 1 of the first embodiment described above exerts the following effects and advantages. (1) In the first embodiment, at least the portion of the bearings 50 and at least the portion of the base 40 are disposed within the height range H1 of the mirror unit 10 in the axial direction of the shaft 30, in the region on the side of the mirror unit 10 facing away from the mirror surface 11. Accordingly, the size of the mirror unit 10 of the mirror oscillation device 1 in the axial direction can be reduced by arranging the bearings 50 and the base 40 to the region on the side of the mirror unit 10 facing away from the mirror surface 11. Furthermore, the proportion of the mirror surface 11 of the mirror unit 10 by size in the axial direction relative to the mirror oscillation device 1 can be increased. Thus, the LiDAR device 2 using this mirror oscillation device 1 can reduce the size LH of the mirror unit 10 in the axial direction, i.e., the size LH perpendicular to the direction in which the mirror unit 10 oscillates. As a result, when the LiDAR device 2 is mounted on the roof 6 of the vehicle, it is possible to prevent the rooftop from being in the significantly protruding convex shape above the vehicle, or to prevent the LiDAR device 2 from significantly protruding from the roof 6 toward the interior of the vehicle. In addition, the LiDAR device 2 using this mirror oscillation device 1 can increase the spot diameter 7 of the laser beam by enlarging the mirror surface 11 of the mirror unit 10, thereby improving the S/N ratio and expanding the measurement range.

(2) In the first embodiment, the outer edge 56 of the bearing 50 on the one side in the axial direction and the outer edge 46 of the base 40 on the one side in the axial direction, are positioned at the same height as, or on the other side in the axial direction relative to, the outer edge 13 of the mirror unit 10 on the one side in the axial direction. In addition, the outer edge 57 of the bearing 50 on the other side in the axial direction and the outer edge 47 of the base 40 on the other side in the axial direction, are positioned at the same height as, or on the one side in the axial direction relative to, the outer edge 14 of the mirror unit 10 on the other side in the axial direction. Accordingly, the entirety of the bearing 50 and base 40 are disposed within the height range H1 of the mirror unit 10 in the axial direction, in the region on the side of the mirror unit 10 facing away from the mirror surface 11. Thus, the size of the mirror oscillation device 1 in the axial direction can be further reduced. Furthermore, the proportion of the mirror surface 11 of the mirror unit 10 by size in the axial direction relative to the mirror oscillation device 1 can be increased. In the present disclosure, "the same height" not only refers to being exactly the same height, but also includes being substantially the same height, e.g., within manufacturing tolerances.

(3) In the first embodiment, at least the part of the actuator 60 is disposed in the region on the side of the mirror unit 10 facing away from the mirror surface 11, within the height range H1 of the mirror unit 10 in the axial direction. Accordingly, the size of the mirror unit 10 in the axial direction, in the mirror oscillation device 1 including the actuator 60, can be reduced, by disposing the actuator 60 in the region on the side of the mirror unit 10 facing away from the mirror surface 11. Furthermore, the proportion of the mirror surface 11 of the mirror unit 10 by size in the axial direction relative to the mirror oscillation device 1 can be increased.

(4) In the first embodiment, the outer edge 601 of the actuator 60 on the one side in the axial direction is positioned at the same height as, or on the other side relative to, the outer edge 13 of the mirror unit 10 on the other side in the axial direction. The outer edge 602 of the actuator 60 on the other side in the axial direction is positioned at the same height as, or on the one side relative to, the outer edge 14 of the mirror unit 10 on the other side in the axial direction. Accordingly, the entirety of the actuator 60 is disposed in the region on the side of the mirror unit 10 facing away from the mirror surface 11, and within the height range H1 of the mirror unit 10 in the axial direction. Thus, in the mirror oscillation device 1 including the actuator 60, the size of the mirror unit 10 in the axial direction can be further reduced. Furthermore, the proportion of the mirror surface 11 of the mirror unit 10 by size in the axial direction relative to the mirror oscillation device 1 can be further increased.

(5) In the first embodiment, at least the part of the sensor 70 is disposed in the region on the side of the mirror unit 10 facing away from the mirror surface 11, and within the height range H1 of the mirror unit 10 in the axial direction. Accordingly, the size of the mirror unit 10 in the mirror oscillation device 1 including the sensor 70 can be reduced, by disposing the sensor 70 in the region on the side of the mirror unit 10 facing away from the mirror surface 11. Furthermore, the proportion of the mirror surface 11 of the mirror unit 10 by size in the axial direction relative to the mirror oscillation device 1 can be further increased.

(6) In the first embodiment, the outer edge 75 of the sensor 70 on the one side in the axial direction is positioned at the same height as, or on the other side relative to, the outer edge 13 of the mirror unit 10 on the one side in the axial direction. The outer edge 76 of the sensor 70 on the other side in the axial direction is positioned at the same height as, or on the one side relative to, the outer edge 14 of the mirror unit 10 on the other side in the axial direction. Accordingly, the entirety of the sensor 70 is disposed in the region on the side of the mirror unit 10 facing away from the mirror surface 11, and within the height range H1 of the mirror unit 10 in the axial direction. Thus, in the mirror oscillation device 1 including the sensor 70, the size of the mirror unit 10 in the axial direction can be further reduced. Furthermore, the proportion of the mirror surface 11 of the mirror unit 10 by size in the axial direction relative to the mirror oscillation device 1 can be further increased.

(7) In the first embodiment, the sensor 70 is the rotary encoder that includes the rotary disk 71 which rotates together with the shaft 30, and the detecting element 72 that detects the position of the rotary disk 71 relative to the base 40. Accordingly, the size of the sensor 70 in the axial direction can be reduced.

(8) In the first embodiment, the surfaces 44 and 45 of the base 40 face the mirror unit 10 and are inclined relative to the mirror unit 10 in the state of the third angle, so that the surfaces 44 and 45 extend away from both the mirror unit 10 and the shaft 30. As a result, when the actuator 60 drives the mirror unit 10 to oscillates, the interference between the base 40 and the mirror unit 10 can be prevented. Thus, an angular range in which the mirror can oscillate can be secured. The surfaces 44 and 45 of the base 40 facing the mirror unit 10 may be the flat inclined surfaces or the curved inclined surfaces.

(9) In the first embodiment, the surfaces 68 of the stator 62 of the actuator 60 face the mirror unit 10 and are inclined relative to the mirror unit 10 in the state of the third angle, so that the surfaces 68 extend away from both the mirror unit 10 and the shaft 30. As a result, when the actuator 60 drives the mirror unit 10 to oscillates, the interference between the stator 62 and the mirror unit 10 can be prevented. Thus, the angular range in which the mirror can oscillate can be secured. The surfaces 68 of the stator 62 facing the mirror unit 10 may be the flat inclined surfaces or the curved inclined surfaces.

### (Second Embodiment)

The second embodiment will be described. The second embodiment is similar to the first embodiment except for a part of the configuration of the mirror oscillation device 1 modified from the corresponding configuration of the first embodiment. Accordingly, only parts different from the corresponding parts of the first embodiment will be described.

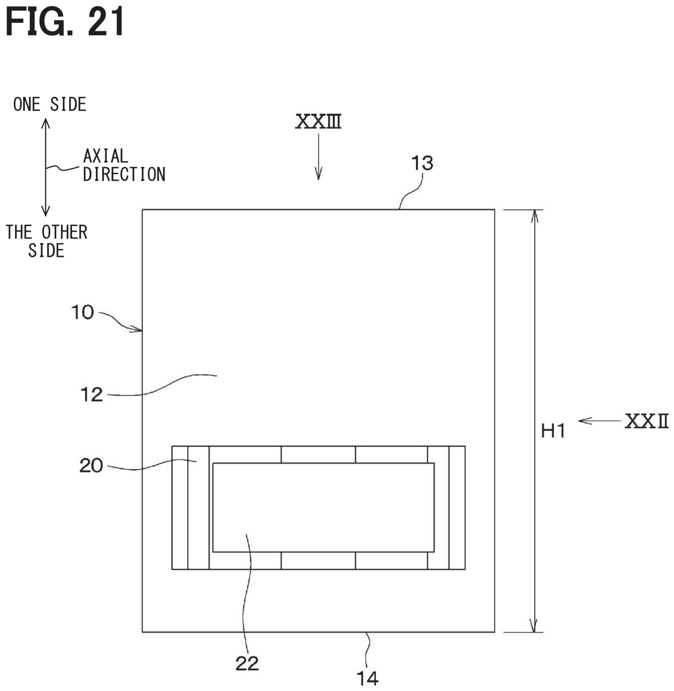

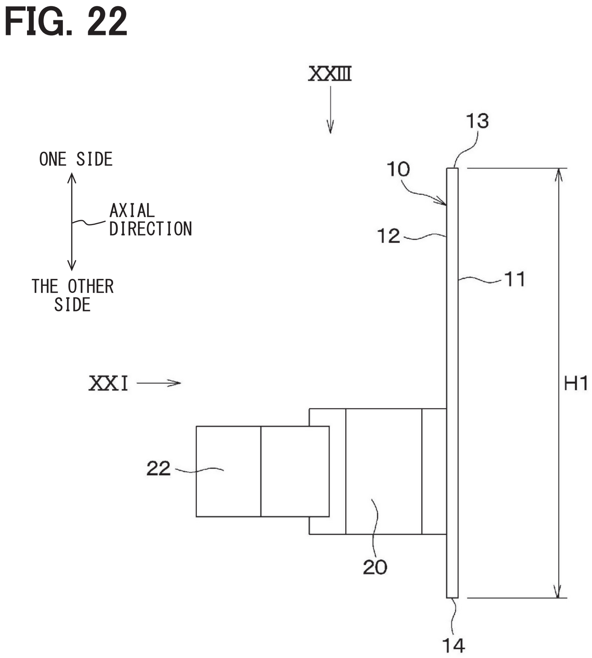

As illustrated in FIGS. 21 to 23, the mirror oscillation device 1 of the second embodiment includes a counterweight 22. The counterweight 22 is disposed to extend from a part of the extending portion 20 facing away from the mirror unit 10. The counterweight 22 is in a fan shape centered around the central axis CL when viewed from the one side of the shaft 30 in the axial direction. Furthermore, the counterweight 22 is integrated with the extending portion 20 and the mirror unit 10. The counterweight 22 may be made from a separate member from the extending portion 20 and be fixed to the extending portion 20.

A shape and weight of the counterweight 22 are set so that a center of gravity of an integrated component including the mirror unit 10, the extending portion 20, and the counterweight 22, approaches or coincides with the central axis CL of the shaft 30. The center of gravity of the integrated component including the mirror unit 10, the extending portion 20, and the counterweight 22 may coincide with the central axis CL of the shaft 30. In the present disclosure, the term "coincide" includes not only complete coincidence but also substantial coincidence, including manufacturing tolerances.

The mirror oscillation device 1 of the second embodiment described above can reduce an inertia moment when the mirror unit 10 oscillates, by the counterweight 22, thereby reducing occurrence of vibration and abnormal noise.

### (Third Embodiment)

The third embodiment will be described below. The third embodiment is similar to the second embodiment except for a part of the configuration of the counterweight 22 modified from the corresponding configuration of the second embodiment. Accordingly, only parts different from the corresponding parts of the second embodiment will be described.

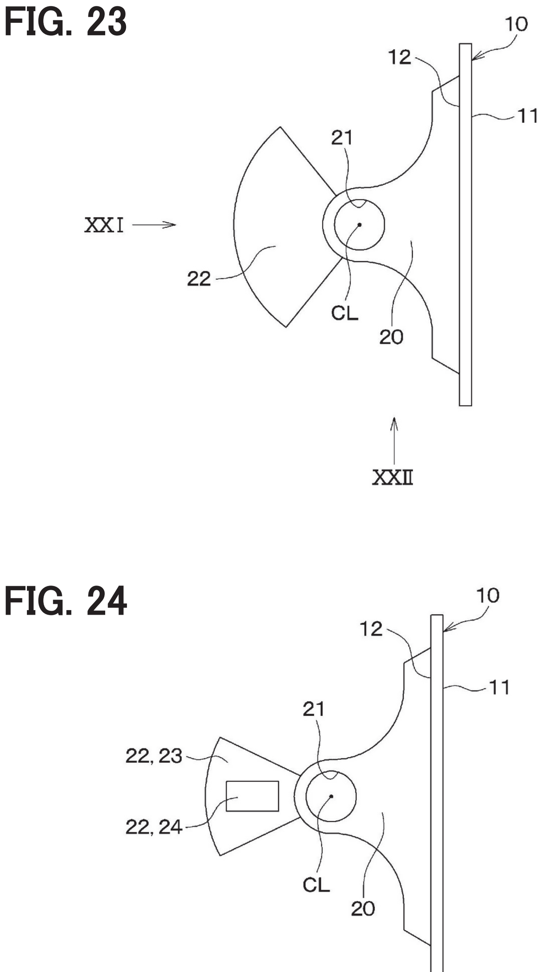

As illustrated in FIG. 24, the counterweight 22 in the mirror oscillation device 1 of the third embodiment includes a resin body 23 and a weight portion 24. The resin body 23 is made of resin and is integrated with the extending portion 20 and the mirror unit 10. The resin body 23 may be made of a separate member from the extending portion 20 and may be fixed to the extending portion 20. The weight portion 24 is made of a material having a higher specific gravity than that of the resin body 23, and is fixed to the resin body 23. Specifically, the weight portion 24 may be made of metal and is molded into the resin body 23.

The mirror oscillation device 1 of the third embodiment described above can reduce a size of the counterweight 22, by constituting the counterweight 22 with the resin body 23 and the weight portion 24. In addition, an amount of expensive resin used can be reduced, thereby reducing manufacturing costs.

### (Other Embodiments)

(1) In the above embodiments, the mirror oscillation device 1 has been described as being used in the LiDAR device 2. However, the mirror oscillation device 1 may be used in various optical scanning devices, such as multifunction printers or laser beam printers.
(2) In the above embodiments, the LiDAR device 2 using the mirror oscillation device 1 has been described as being mounted on the roof 6 of the vehicle. However, the mirror oscillation device 1 may be mounted on a back side of a bumper or behind a grille of the vehicle. Alternatively, the LiDAR device 2 may be mounted on objects other than the vehicle.
(3) In the above embodiments, it has been described that at least a portion of each of the base 40, bearings 50, actuator 60, and sensor 70 is disposed within the height range H1 of the mirror unit 10. However, it is not limited to this. For example, at least a part of the base 40 and at least a part of the bearings 50 may be disposed within the height range H1 of the mirror unit 10, while the actuator 60 and sensor 70 may not be disposed within the height range H1 of the mirror unit 10.

Alternatively, at least the part of the base 40, at least the part of the bearings 50, and at least the part of the actuator 60 may be disposed within the height range H1 of the mirror unit 10, while the sensor 70 may not be disposed within the height range H1 of the mirror unit 10.

Alternatively, at least the part of the base 40, at least the part of the bearings 50, and at least the part of the sensor 70 may be disposed within the height range H1 of the mirror unit 10, while the actuator 60 may not be disposed within the height range H1 of the mirror unit 10.

(3) In the above embodiments, it has been described that the entirety of the base 40, bearings 50, actuator 60, and sensor 70 may be disposed within the height range H1 of the mirror unit 10. However, it is not limited to this. For example, the base 40, bearings 50, actuator 60, and sensor 70 may each have a portion that is within the height range H1 of the mirror unit 10, and other portions may protrude outside the height range H1 of the mirror unit 10. The configuration described in Patent Literature 1 is such that the entirety of the first base portion, the second base portion, the bearings, the actuator, and the sensor protrude from the height range H1 of the mirror unit. Compared to the configuration of Patent Literature 1, the mirror oscillation device 1 of the present disclosure can reduce the size of the mirror unit 10 in the axial direction. Furthermore, compared to the configuration of Patent Literature 1, the mirror oscillation device 1 of the present disclosure can increase the proportion of the mirror surface 11 of the mirror unit 10 by size in the axial direction relative to the mirror oscillation device 1.

(4) In each of the embodiments described above, the mirror oscillation device 1 has been explained as including the actuator 60. However, it is not limited to this, and the mirror oscillation device 1 may not include the actuator 60. In such a case, the mirror oscillation device 1 may be configured so that the actuator 60, which is disposed in the housing 3 of the LiDAR device 2, drives the mirror unit 10 to oscillate.

(5) In each of the embodiments described above, the actuator 60 is disposed in the region on a side of the first base portion 41 facing away from the second base portion 42. However, it is not limited this, the actuator 60 may be disposed between the first base portion 41 and the second base portion 42.

(6) In each of the embodiments described above, the mirror oscillation device 1 has been described as including the sensor 70 that detects the angle of the mirror unit 10. However, it is not limited to this, and the mirror oscillation device 1 may not include this sensor 70. In such a case, a sensor 70 disposed in the housing 3 of the LiDAR device 2 may be configured to detect the angle of the mirror unit 10.

(7) In each of the embodiments described above, the rotary encoder has been exemplified as the sensor 70 disposed in the mirror oscillation device 1. However, it is not limited to this, various types of sensors that are non-contact or contact, such as Hall IC, magnetoresistive element, or inductive sensor, may be adopted.

(8) In each of the embodiments described above, the counterweight 22 has been described as being fixed to the extending portion 20. However, it is not limited to this, and the counterweight 22 may be fixed to the shaft 30.

(9) In each of the embodiments described above, a configuration has been described in which the shaft 30, extending portion 20, and mirror unit 10 are supported so as to be capable of oscillating relative to the base 40 via the bearing 50. However, it is not limited to this. For example, the base 40 and the shaft 30 may be fixed, and the extending portion 20 and the mirror unit 10 may be supported so as to be capable of oscillating relative to the shaft 30 via the bearing 50.

The present disclosure is not limited to the embodiments described above, and can be modified as appropriate. The above described embodiments and a part thereof are not irrelevant to each other, and can be appropriately combined with each other unless the combination is obviously impossible. The constituent element(s) of each of the above embodiments is/are not necessarily essential unless it is specifically stated that the constituent element(s) is/are essential in the above embodiment, or unless the constituent element(s) is/are obviously essential in principle. Furthermore, in each of the embodiments described above, when numerical values such as the number, numerical value, quantity, range, and the like of the constituent elements of the embodiment are referred to, except in the case where the numerical values are expressly indispensable in particular, the case where the numerical values are obviously limited to a specific number in principle, and the like, the present disclosure is not limited to the specific number. Furthermore, in each of the above embodiments, when referring to a shape, positional relationship, or the like of components, such shape or positional relationship is not limited thereto unless specifically specified or fundamentally limited to a specific shape, positional relationship, or the like.

### (Various Aspects of Present Disclosure)

The present disclosure described above can be understood from the following features, for example.

### Aspect 1

A mirror oscillation device includes a mirror unit (10), an extending portion (20), a shaft (30), a base (40), and a bearing (50). The mirror unit includes a mirror surface (11) that reflects light. The extending portion extends from a surface (12) of the mirror unit facing away from the mirror surface. The shaft is fixed to the extending portion. The base is disposed in a region on a side of the mirror unit facing away from the mirror surface of the mirror unit. The bearing is disposed on the base and faces the extending portion in an axial direction of the shaft. The bearing supports the shaft to be rotatable relative to the base. The mirror unit is configured to oscillate within a predetermined angular range about a central axis (CL) of the shaft, together with the shaft and the extending portion. At least a portion of the bearing and at least a portion of the base are disposed within a height range (H1) of the mirror unit in the axial direction of the shaft in the region on the side of the mirror unit facing away from the mirror surface.

### Aspect 2

In the mirror oscillation device according to aspect 1, the mirror unit has one outer edge (13) facing one side of the mirror oscillation device in the axial direction and an other outer edge (14) facing an other side of the mirror oscillation device in the axial direction. The bearing has one outer edge (56) facing the one side of the mirror oscillation device in the axial direction, and an other outer edge (57) facing the other side of the mirror oscillation device in the axial direction. The base has one outer edge (46) facing the one side of the mirror oscillation device in the axial direction, and an other outer edge (47) facing the other side of the mirror oscillation device in the axial direction. The one outer edge of the bearing and the one outer edge of the base are positioned at a same height as the one outer edge of the mirror unit in the axial direction, or between the one outer edge of the mirror unit and the other outer edge of the mirror unit in the axial direction. The other outer edge of the bearing and the other outer edge of the base are positioned at a same height as the other outer edge of the mirror unit in the axial direction, or between the other outer edge of the mirror unit and the one outer edge of the mirror unit in the axial direction.

### Aspect 3

In the mirror oscillation device according to aspect 1 or 2, the mirror oscillation device includes an actuator (60). The actuator is configured to drive the mirror unit in an oscillatory manner, together with the shaft and the extending portion, within the predetermined angular range about the central axis of the shaft. At least a portion of the actuator is disposed within the height range of the mirror unit in the axial direction of the shaft in the region on the side of the mirror unit facing away from the mirror surface.

### Aspect 4

In the mirror oscillation device according to aspect 3, the actuator has one outer edge (601) facing the one side of the mirror oscillation device in the axial direction and an other outer edge (602) facing the other side of the mirror oscillation device in the axial direction. The one outer edge of the actuator is positioned at the same height as the one outer edge of the mirror unit in the axial direction, or between the one outer edge of the mirror unit and the other outer edge of the mirror unit in the axial direction. The other outer edge of the actuator is positioned at the same height as the other outer edge of the mirror unit in the axial direction, or between the other outer edge of the mirror unit and the one outer edge of the mirror unit in the axial direction.

### Aspect 5

In the mirror oscillation device according to any one of aspects 1 to 4, the mirror oscillation device includes a sensor (70). The sensor is configured to detect an angle of the mirror unit relative to the base. At least a portion of the sensor is disposed within the height range of the mirror unit in the axial direction of the shaft in the region on the side of the mirror unit facing away from the mirror surface.

### Aspect 6

In the mirror oscillation device according to aspect 5, the sensor has one outer edge (75) facing the one side of the mirror oscillation device in the axial direction and an other outer edge (76) facing the other side of the mirror oscillation device in the axial direction. The one outer edge of the sensor is positioned at the same height as the one outer edge of the mirror unit in the axial direction, or between the one outer edge of the mirror unit and the other outer edge of the mirror unit in the axial direction. The other outer edge of the sensor is positioned at the same height as the other outer edge of the mirror unit in the axial direction, or between the other outer edge of the mirror unit and the one outer edge of the mirror unit in the axial direction.

### Aspect 7

In the mirror oscillation device according to aspect 1 or 2, the mirror oscillation device includes an actuator and a sensor. The actuator is configured to drive the mirror unit in an oscillatory manner, together with the shaft and the extending portion, within a predetermined angular range about the central axis of the shaft. The sensor is configured to detect an angle of the mirror unit relative to the base. At least a portion of the actuator and at least a portion of the sensor are disposed within the height range of the mirror unit in the axial direction of the shaft in the region on the side of the mirror unit facing away from the mirror surface.

### Aspect 8

In the mirror oscillation device according to aspect 7, the actuator has one outer edge facing the one side of the mirror oscillation device in the axial direction and an other outer edge facing the other side of the mirror oscillation device in the axial direction. The sensor has one outer edge facing the one side of the mirror oscillation device in the axial direction and an other outer edge facing the other side of the mirror oscillation device in the axial direction. The one outer edge of the actuator and the one outer edge of the sensor are positioned at the same height as the one outer edge of the mirror unit in the axial direction, or between the one outer edge of the mirror unit and the other outer edge of the mirror unit in the axial direction. The other outer edge of the actuator and the other outer edge of the sensor are positioned at the same height as the other outer edge of the mirror unit in the axial direction, or between the other outer edge of the mirror unit and the one outer edge of the mirror unit in the axial direction.

### Aspect 9

In the mirror oscillation device according to any one of aspects 5 to 8, the sensor is a rotary encoder including a rotary disk (71) configured to rotate together with the shaft and a detecting element (72) configured to detect a position of the rotary disk relative to the base.

### Aspect 10

In the mirror oscillation device according to any one of aspects 3, 4, 7 and 8, a maximum angle of oscillation of the mirror unit in a counterclockwise direction when viewed from the one side of the mirror oscillation device in the axial direction is referred to as a first angle. A maximum angle of oscillation of the mirror unit in a clockwise direction when viewed from the one side of the mirror oscillation device in the axial direction is referred to as a second angle. An angle at a midpoint between the first angle and the second angle is referred to as a third angle. The base has a surface (44, 45) that faces the mirror unit. The surface of the base is inclined relative to the mirror unit and extends away from both the shaft and the mirror unit in a state where the mirror unit is positioned at the third angle such that interference between the base and the mirror unit is prevented during oscillation of the mirror unit driven by the actuator.

### Aspect 11

In the mirror oscillation device according to any one of aspects 3, 4, 7, 8 and 10, the actuator includes a magnet (61), an electromagnetic coil (63), and a stator (62). The magnet is fixed to the shaft. The electromagnetic coil is configured to generate a magnetic field upon energization. The stator constitutes a magnetic circuit between the electromagnetic coil and the magnet, and is configured to supply a magnetic flux generated by the electromagnetic coil around the magnet. A maximum angle of oscillation of the mirror unit in a counterclockwise direction when viewed from the one side of the mirror oscillation device in the axial direction is referred to as a first angle. A maximum angle of oscillation of the mirror unit in a clockwise direction when viewed from the one side of the mirror oscillation device in the axial direction is referred to as a second angle. An angle at a midpoint between the first angle and the second angle is referred to as a third angle. The stator has a surface (68) that faces the mirror unit. The surface of the stator is inclined relative to the mirror unit and extends away from both the shaft and the mirror unit in a state where the mirror unit is positioned at the third angle such that interference between the stator and the mirror unit is prevented during oscillation of the mirror unit driven by the actuator.

### Aspect 12

In the mirror oscillation device according to any one of aspects 1 to 11, the mirror oscillation device includes a counterweight (22) disposed in a region on a side of the central axis facing away from the mirror unit, and fixed to the extending portion or the shaft.

### Aspect 13

In the mirror oscillation device according to aspect 12, the counterweight includes a resin body (23) and a weight portion (24). The resin body is fixed to the extending portion or the shaft. The weight portion is made of a material having a higher specific gravity than a specific gravity of the resin body, and fixed to the resin body.

### Aspect 14

In the mirror oscillation device according to aspect 12 or 13, a center of gravity of an integrated component including the mirror unit, the extending portion, and the counterweight coincides with the central axis of the shaft.

### Aspect 15

A LiDAR device includes a housing (3), the mirror oscillation device (1) according to any one of aspects 1 to 14, a light source device (4), and a light receiving device (5). The housing includes a window (8) through which laser light passes. The mirror oscillation device is disposed inside the housing. The light source device is disposed inside the housing, and is configured to irradiate the mirror surface of the mirror unit in the mirror oscillation device with the leaser light. The light receiving device that is disposed inside the housing, and is configured to receive the laser light that has been scanned by the mirror surface of the mirror unit in the mirror oscillation device, emitted to an outside through the window of the housing, reflected by an external object, returned through the window of the housing, and reflected by the mirror surface of the mirror unit.

## Claims

1. A mirror oscillation device, comprising:
a mirror unit (10) including a mirror surface (11) that reflects light;
an extending portion (20) that extends from a surface (12) of the mirror unit facing away from the mirror surface;
a shaft (30) fixed to the extending portion;
a base (40) disposed in a region on a side of the mirror unit facing away from the mirror surface of the mirror unit; and
a bearing (50) disposed on the base and facing the extending portion in an axial direction of the shaft, the bearing supporting the shaft to be rotatable relative to the base, wherein
the mirror unit is configured to oscillate within a predetermined angular range about a central axis (CL) of the shaft, together with the shaft and the extending portion, and
at least a portion of the bearing and at least a portion of the base are disposed within a height range (H1) of the mirror unit in the axial direction of the shaft in the region on the side of the mirror unit facing away from the mirror surface.

2. The mirror oscillation device according to claim 1, wherein
the mirror unit has one outer edge (13) facing one side of the mirror oscillation device in the axial direction and an other outer edge (14) facing an other side of the mirror oscillation device in the axial direction,
the bearing has one outer edge (56) facing the one side of the mirror oscillation device in the axial direction, and an other outer edge (57) facing the other side of the mirror oscillation device in the axial direction,
the base has one outer edge (46) facing the one side of the mirror oscillation device in the axial direction, and an other outer edge (47) facing the other side of the mirror oscillation device in the axial direction,
the one outer edge of the bearing and the one outer edge of the base are positioned at a same height as the one outer edge of the mirror unit in the axial direction, or between the one outer edge of the mirror unit and the other outer edge of the mirror unit in the axial direction, and
the other outer edge of the bearing and the other outer edge of the base are positioned at a same height as the other outer edge of the mirror unit in the axial direction, or between the other outer edge of the mirror unit and the one outer edge of the mirror unit in the axial direction.

3. The mirror oscillation device according to claim 1 or 2, further comprising
an actuator (60) configured to drive the mirror unit in an oscillatory manner, together with the shaft and the extending portion, within the predetermined angular range about the central axis of the shaft, wherein
at least a portion of the actuator is disposed within the height range of the mirror unit in the axial direction of the shaft in the region on the side of the mirror unit facing away from the mirror surface.

4. The mirror oscillation device according to claim 3, wherein
the actuator has one outer edge (601) facing the one side of the mirror oscillation device in the axial direction and an other outer edge (602) facing the other side of the mirror oscillation device in the axial direction,
the one outer edge of the actuator is positioned at a same height as the one outer edge of the mirror unit in the axial direction, or between the one outer edge of the mirror unit and the other outer edge of the mirror unit in the axial direction, and
the other outer edge of the actuator is positioned at a same height as the other outer edge of the mirror unit in the axial direction, or between the other outer edge of the mirror unit and the one outer edge of the mirror unit in the axial direction.

5. The mirror oscillation device according to claim 1 or 2, further comprising
a sensor (70) configured to detect an angle of the mirror unit relative to the base, wherein
at least a portion of the sensor is disposed within the height range of the mirror unit in the axial direction of the shaft in the region on the side of the mirror unit facing away from the mirror surface.

6. The mirror oscillation device according to claim 5, wherein
the sensor has one outer edge (75) facing the one side of the mirror oscillation device in the axial direction and an other outer edge (76) facing the other side of the mirror oscillation device in the axial direction,
the one outer edge of the sensor is positioned at a same height as the one outer edge of the mirror unit in the axial direction, or between the one outer edge of the mirror unit and the other outer edge of the mirror unit in the axial direction, and
the other outer edge of the sensor is positioned at a same height as the other outer edge of the mirror unit in the axial direction, or between the other outer edge of the mirror unit and the one outer edge of the mirror unit in the axial direction.

7. The mirror oscillation device according to claim 1 or 2, further comprising:
an actuator configured to drive the mirror unit in an oscillatory manner, together with the shaft and the extending portion, within a predetermined angular range about the central axis of the shaft; and
a sensor configured to detect an angle of the mirror unit relative to the base, wherein
at least a portion of the actuator and at least a portion of the sensor are disposed within the height range of the mirror unit in the axial direction of the shaft in the region on the side of the mirror unit facing away from the mirror surface.

8. The mirror oscillation device according to claim 7, wherein
the actuator has one outer edge facing the one side of the mirror oscillation device in the axial direction and an other outer edge facing the other side of the mirror oscillation device in the axial direction,
the sensor has one outer edge facing the one side of the mirror oscillation device in the axial direction and an other outer edge facing the other side of the mirror oscillation device in the axial direction,
the one outer edge of the actuator and the one outer edge of the sensor are positioned at a same height as the one outer edge of the mirror unit in the axial direction, or between the one outer edge of the mirror unit and the other outer edge of the mirror unit in the axial direction, and
the other outer edge of the actuator and the other outer edge of the sensor are positioned at a same height as the other outer edge of the mirror unit in the axial direction, or between the other outer edge of the mirror unit and the one outer edge of the mirror unit in the axial direction.

9. The mirror oscillation device according to claim 5, wherein
the sensor is a rotary encoder including a rotary disk (71) configured to rotate together with the shaft and a detecting element (72) configured to detect a position of the rotary disk relative to the base.

10. The mirror oscillation device according to claim 3, wherein
a maximum angle of oscillation of the mirror unit in a counterclockwise direction when viewed from the one side of the mirror oscillation device in the axial direction is referred to as a first angle,
a maximum angle of oscillation of the mirror unit in a clockwise direction when viewed from the one side of the mirror oscillation device in the axial direction is referred to as a second angle,
an angle at a midpoint between the first angle and the second angle is referred to as a third angle,
the base has a surface (44, 45) that faces the mirror unit, and
the surface of the base is inclined relative to the mirror unit and extends away from both the shaft and the mirror unit in a state where the mirror unit is positioned at the third angle such that interference between the base and the mirror unit is prevented during oscillation of the mirror unit driven by the actuator.

11. The mirror oscillation device according to claim 3, wherein
the actuator includes:
a magnet (61) fixed to the shaft;
an electromagnetic coil (63) configured to generate a magnetic field upon energization; and
a stator (62) that constitutes a magnetic circuit between the electromagnetic coil and the magnet, and is configured to supply a magnetic flux generated by the electromagnetic coil around the magnet,
a maximum angle of oscillation of the mirror unit in a counterclockwise direction when viewed from the one side of the mirror oscillation device in the axial direction is referred to as a first angle,
a maximum angle of oscillation of the mirror unit in a clockwise direction when viewed from the one side of the mirror oscillation device in the axial direction is referred to as a second angle,
an angle at a midpoint between the first angle and the second angle is referred to as a third angle,
the stator has a surface (68) that faces the mirror unit, and
the surface of the stator is inclined relative to the mirror unit and extends away from both the shaft and the mirror unit in a state where the mirror unit is positioned at the third angle such that interference between the stator and the mirror unit is prevented during oscillation of the mirror unit driven by the actuator.

12. The mirror oscillation device according to claim 1 or 2, further comprising
a counterweight (22) disposed in a region on a side of the central axis facing away from the mirror unit, and fixed to the extending portion or the shaft.

13. The mirror oscillation device according to claim 12, wherein
the counterweight includes:
a resin body (23) fixed to the extending portion or the shaft; and
a weight portion (24) made of a material having a higher specific gravity than a specific gravity of the resin body, and fixed to the resin body.

14. The mirror oscillation device according to claim 12, wherein
a center of gravity of an integrated component including the mirror unit, the extending portion, and the counterweight coincides with the central axis of the shaft.

15. A LiDAR device, comprising:
a housing (3) including a window (8) through which laser light passes;
the mirror oscillation device (1) according to claim 1, disposed inside the housing;
a light source device (4) that is disposed inside the housing, and is configured to irradiate the mirror surface of the mirror unit in the mirror oscillation device with the leaser light; and
a light receiving device (5) that is disposed inside the housing, and is configured to receive the laser light that has been scanned by the mirror surface of the mirror unit in the mirror oscillation device, emitted to an outside through the window of the housing, reflected by an external object, returned through the window of the housing, and reflected by the mirror surface of the mirror unit.
